# EUROPÄISCHE PATENTSCHRIFT

(11) **EP 2 144 945 B1**
(45) Veröffentlichungstag und Bekanntmachung des Hinweises auf die Patenterteilung: **26.10.2011**
(21) Anmeldenummer: 08735707.5
(22) Anmeldetag: 02.04.2008
(51) Int. Cl.: C08G 18/36, C08G 18/38, C09J 175/04

(54) **VERFAHREN ZUM PRIMERLOSEN VERKLEBEN VON METALL- ODER KUNSTSTOFFSUBSTRATEN**
METHOD FOR THE PRIMERLESS BONDING OF METAL OR PLASTIC SUBSTRATES
PROCÉDÉ DE COLLAGE DE SUBSTRATS EN MÉTAL OU EN MATIÈRE PLASTIQUE SANS COUCHE DE FOND

(30) Priorität: 07.05.2007 DE 102007021794
(43) Veröffentlichungstag der Anmeldung: 20.01.2010
(73) Patentinhaber: Henkel AG & Co. KGaA, 40589 Düsseldorf (DE)
(72) Erfinder: THIELE, Lothar, 40764 Langenfeld (DE); JONSCHER, Karin, 40589 Düsseldorf (DE)
(86) Internationale Anmeldenummer: PCT/EP2008/053957
(87) Internationale Veröffentlichungsnummer: WO 2008/135325

(56) Entgegenhaltungen:
- WO-A-02/066572
- DE-A1- 4 401 572

## Beschreibung

Die Erfindung betrifft ein Verfahren zum Verkleben von Metall- oder Kunststoffsubstraten mit Zwei-Komponenten-Polyurethanklebstoffen, wobei die Substrate nicht mit Primern vorbehandelt werden. Weiterhin wird ein entsprechend geeigneter 2K-PU-Klebstoff zur Verfügung gestellt.

Polyurethan-Klebstoffe sind an sich bekannt. So wird in der DE 44 12 759 A1 ein Einkomponenten-Polyurethan-Klebstoff beschrieben, der sich durch einen Gehalt an 50 bis 95 Gew.-% eines Isocyanat-haltigen Polyurethan-Prepolymeren zusammen mit hydrophoben Siliciumdioxidpigmenten und Molekularsiebpulvern, sowie gegebenenfalls durch weitere übliche Zusatzstoffe und/oder Beschleuniger auszeichnet. Ein Nachteil ist die lange Preßzeit der beschriebenen Holzverklebung. Mit Einkomponenten-Polyurethan-Klebstoffen sind prinzipiell nicht die kurzen Preßzeiten zweikomponentiger Klebstoffe auf Polyurethanbasis zu erreichen.

Es sind auch andere Polyurethan-Klebstoffe bekannt. So werden in der DE 44 01 572 A1 zweikomponentige Polyurethan-Klebstoffe auf der Basis einer Isocyanat-Komponente und einer Polyol-Komponente beschrieben, welche neben einem oleochemischen Polyol 2 bis 7 Gewichtsprozent, bezogen auf das oleochemische Polyol, mindestens eines di- und/oder trifunktionellen Alkohols enthält und wobei die Hydroxylzahl der Alkohole oder deren Gemische 1 100 bis 1 850 beträgt. Diese Zusammensetzungen können zum Verkleben von starren oder flexiblen Substraten verwendet werden, insbesondere von Kunststoffen, Metallen, Glas oder Holz.

Weiterhin ist die EP 136 6132 A1 bekannt. Es werden dort 2K-PU-Klebstoffe beschrieben, die in der Polyolkomponente verschiedene Harze gelöst enthalten. Es werden bevorzugt Holzwerkstoffe verklebt. Es werden verschiedene weitere Substrate aufgezählt, unter anderem auch Glas, Metall oder Kunststoff. Eine Auswahl der Harze und der Verklebungsbedingungen wird nicht erwähnt.

WO 02/066572 offenbart 2K-Polyurethan-Klebstoffe für Holzwerkstoffe. Der Klebstoff besteht aus zwei Komponenten, wobei die Polyolkomponente 1 bis 7,5 Gew.-% mindestens eines Diols mit einer Hydroxylzahl von 400 bis 2000 enthalten muss.

Das Verkleben von Metall- oder Kunststoffsubstraten erfordert in der allgemeinen Praxis eine Vorbehandlung der Substrate. Beispielsweise müssen diese durch spezielle Verfahren, wie Corona-, Plasmabehandlung oder Beflämmen vorbehandelt werden, oder es wird eine chemische Vorbehandlung durchgeführt. Anschließend erfolgt üblicherweise der Auftrag eines häufig lösemittelhaltigen Primers. Diese Arbeitsweise erfordert teilweise erheblichen technischen Zusatzaufwand. Der Einsatz von Lösemitteln ist ökologisch bedenklich.

Aus diesem Stand der Technik ergibt sich die Aufgabe, einen Klebstoff bereitzustellen, der eine vereinfachte Verklebung von Metallen oder Kunststoffoberflächen gestattet, wobei auf das Auftragen von reaktiven oder lösemittelhaltigen Primern verzichtet werden kann. Weiterhin soll eine verbesserte Verklebung erzielt werden, die auch unter feuchten Vernetzungsbedingungen aushärtet und bei einer Langzeitbelastung unter Feuchtraumbedingungen in der Verklebung nicht versagt.

Gegenstand der Erfindung ist also ein Verfahren zum Verkleben von Metall- oder Kunststoffsubstraten, wobei das Substrat von anhaftenden Verunreinigungen befreit wird, direkt auf mindestens ein Substrat ein 2-Komponenten-Polyurethan-Klebstoff aufgebracht wird, ohne vorher einen Primer aufzutragen, und die Substrate zusammengefügt und ausgehärtet werden, wobei der 2- Komponenten-Polyurethan-Klebstoff besteht aus einer Polyolkomponente A enthaltend 1 bis 95 Gew.-% bezogen auf die Komponente mindestens eines oleochemischen Polyols, 1 bis 10 Gew.-% mindestens eines drei-, vier- oder fünffunktionellen Polyols mit einem Molekulargewicht von 90 bis 750 g/mol, 2,5 bis 60 Gew.-% mindestens eines Aldehyd-, Keton- und/oder Keton-/Aldehyd-Harz mit einer Molekulargewicht von 250 bis 25000 g/mol, sowie 0 bis 70 Gew.-% von weiteren Hilfsstoffen, wobei die imponente A frei von molekularen Diolen mit einem Molekular- gewicht unter 300g/mol ist, und einer Komponente B enthaltend mindestens ein Polyisocyanat, wobei das NCO/OH-Verhältnis der Isocyanatkomponente zu der Polyolkomponente zwischen 1,0 bis 2,0:1 beträgt.

Als Substrate sind eine Vielzahl von Metall- oder Kunststoffsubstraten geeignet. Beispiele für solche Materialien sind Stahl, Edelstahl, Kupfer, Messing, Aluminium, eloxiertes Aluminium, Aluminiumlegierungen, ABS, Epoxidharzen, Polystyrol, Polyamid, Polymethylmethacrylat (PMMA), Polyestern, Polycarbonat, PVC. Diese können steife Substrate oder flexible Folien sein.

Die Polyolkomponente A besteht aus einem Gemisch von an sich bekannten Diolen und Polyolen und tri- oder höherfunktionellen kurzkettigen Polyolen.

Unter "oleochemischen Polyolen" versteht man Polyole auf Basis natürlicher Öle und Fette, z.B. die Reaktionsprodukte von epoxidierten Fettstoffen mit mono-, di- oder polyfunktionellen Alkoholen, oder Glycerinester langkettiger Fettsäuren, die zumindest teilweise mit Hydroxylgruppen substituiert sind.

Beispiele für solche Verbindungen sind Ringöffnungsprodukte epoxidierter Triglyceride, also epoxidierter Fettsäureglycerinester, bei denen die Ringöffnung unter Erhalt der Esterbindungen ausgeführt worden ist. Zur Herstellung der Ringöffnungsprodukte kann man von einer Vielzahl epoxidierter Triglyceride pflanzlichen oder tierischen Ursprungs ausgehen. So sind beispielsweise epoxidierte Triglyceride geeignet, die 2 bis 10 Gewichtsprozent Epoxidsauerstoff aufweisen. Derartige Produkte sind durch Epoxidierung der Doppelbindungen aus einer Reihe von Fetten und Ölen herstellbar, insbesondere epoxidierte Triglyceride.

Als Alkohole für die Ringöffnung der epoxidierten Triglyceride können Methanol, Ethanol, Propanol, Isopropanol, Butanol, Hexanol, 2-Ethylhexanol, Fettalkohole mit 6 bis 22 C-Atomen, Cyclohexanol, Benzylalkohol, 1,2-Ethanol, 1,2-Propandiol, 1,3-Propandiol, 1,4-Butandiol. 1,6-Hexandiol, Neopentylglykol, Trimethylolpropan, Glycerin, Trimethylolethan, Pentaerythrit, Sorbit sowie ethergruppenhaltige Hydroxyverbindungen wie Alkylglykole oder oligomere Glykole sowie oligomere Glycerine eingesetzt werden.

Die Ringöffnungsreaktion epoxidierter Fettsäureester oder Triglyceride mit einem Alkohol kann gegebenenfalls von einer Umesterung mit sich selber oder anderen, nachträglich zugefügten Triglyceriden gefolgt sein. Solche oleochemischen Polyole sind z.B. in der deutschen Patentanmeldung DE-A1 41 28 649 beschrieben.

Eine weitere Gruppe der oleochemischen Polyole sind Ringöffnungs- und Umesterungsprodukte von epoxidierten Fettsäureestern niederer Alkohole, also von epoxidierten Fettsäuremethyl-, -ethyl-, -propyl- oder -butylestern. Bevorzugt sind hier die Ringöffnungs- oder Umesterungsprodukte mit Alkoholen der Funktionalität 2 bis 4, insbesondere die Umsetzungsprodukte mit Ethylenglykol, Propylenglykol, oligomeren Ethylenglykolen, oligomeren Propylenglykolen, Glycerin, Trimethylolpropan oder Pentaerythrit. Die Herstellung derartiger Produkte kann nach bekannten Epoxidations- oder Ringöffnungsverfahren erfolgen, wobei die Umesterung während oder nach dem Ringöffnungsschritt durch Entfernen des niederen Alkohols aus dem Reaktionsgleichgewicht durchgeführt werden kann.

Ebenfalls zu den oleochemischen Polyolen zählen die Umsetzungsprodukte epoxidierter Fettalkohole mit C2-C8-Alkoholen der Funktionalität 1 bis 10, insbesondere 2 bis 4.

Im Rahmen der Erfindung ist auch die Verwendung von oleochemischen Polyolen möglich, die über die Umesterung von di- oder polyfunktionellen Alkoholen wie z.B. dem Additionsprodukt von Ethylenoxid oder Propylenoxid an Glycerin mit Triglyceriden zugänglich sind.

Diese oleochemischen Polyole können Hydroxylzahlen von 50 bis 400, bevorzugt 100 bis 300 aufweisen.

Besonders bevorzugt ist die Verwendung von Rizinusöl und Dimerdiolen sowie solchen Polyesterpolyolen, die durch vollständige Ringöffnung von epoxidierten Triglyceriden eines wenigstens teilweise olefinisch ungesättigten Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Weiterhin muss der erfindungsgemäß einsetzbare Klebstoff mindestens einen drei- oder mehrwertigen Polyol enthalten. Über die Menge kann die Vernetzungsdichte des Klebstoffs beeinflusst werden. Als drei- oder höherfunktionelle Polyole sind niedermolekulare Polyole oder deren Gemisch geeignet. Das Molekulargewicht soll zwischen 90 und 750 g/mol betragen. Besonders bevorzugt sind Polyole mit 3, 4 oder 5 OH-Gruppen wie Glycerin, Triethanolamin, Pentaerythrit, propoxyliertes oder ethoxyliertes Ethylendiamin, Trimethylolpropan, Trimethylolethan, Neopentylalkohol oder Additionsprodukte von Ethylen- oder Propylenoxid an Glycerin oder Trimethylolpropan.

Zusätzlich zu diesen niedermolekularen drei und höherfunktionellen Polyolen können auch die in der PU-Herstellung bekannten höhermolekularen Polyole in einer Menge von 0 bis 70, insbesondere 0,5 bis 50 Gew.-%, bezogen auf die PolyolKomponente insgesamt, eingesetzt werden. Als höhermolekulare Polyole eignen sich vorzugsweise flüssige Polyhydroxyverbindungen insbesondere mit zwei bzw. drei Hydroxylgruppen Molekül. Beispiele dafür sind di- und/oder trifunktionelle Polyalkylenglykole im Molekulargewichtsbereich größer 750 bis 6000 g/mol , vorzugsweise im Bereich von 1000 bis 3000 g/mol, insbesondere Polypropylenglykole. Es können auch statistische und/oder Blockcopolymere des Ethylenoxids und Propylenoxids eingesetzt werden. Eine weitere Gruppe von vorzugsweise einzusetzenden Polyetherpolyolen sind die Polytetramethylenglykole, die z.B. durch die saure Polymerisation von Tetrahydrofuran hergestellt werden. Dabei liegt der Molekulargewichtsbereich der Polytetramethylenglykole zwischen 300 und 6000 g/mol, vorzugsweise im Bereich von 500 bis 4000 g/mol.

Weiterhin sind als höhermolekulare Polyole flüssige Polyester geeignet, die durch Kondensation von Di- bzw. Tricarbonsäuren, wie z.B. Adipinsäure, Sebacinsäure und Glutarsäure, mit niedermolekularen Diolen bzw. Triolen, wie z.B. Etylenglykol, Propylenglykol, Diethylenglykol, Triethylenglykol, Dipropylenglykol, 1,4-Butandiol, 1,6-Hexandiol, Glyzerin oder Trimethylolpropan, hergestellt werden können.

Eine weitere Gruppe solcher einzusetzenden Polyole sind die Polyester auf der Basis von ε-Caprolacton, auch "Polycaprolactone" genannt sowie Polycarbonatpolyole. Dabei sollen diese einen Molekulargewichtsbereich von 300 bis 6000 g/mol, vorzugsweise im Bereich von 500 bis 3000 g/mol aufweisen (Molekulargewicht wie durch GPC erhältlich).

Um eine verbesserte Standfestigkeit auch unter feuchten Umgebungsbedingungen zu erhalten, soll der erfindungsgemäß geeignete Klebstoff keine niedermolekularen Diole, beispielsweise mit einem Molekulargewicht unter 300 g/mol, enthalten. Diese beeinflussen die Wasserstabilität der Verklebung ungünstig.

Die Menge des oleochemischen Polyols soll 1 bis 95 Gew.-% betragen insbesondere 20 bis 95 Gew.-% . Die Menge der höherfunktionellen Polyole soll 1 bis 10 Gew.-%, insbesondere 2 bis 7,5 Gew.-% betragen, jeweils bezogen auf die Polyolkomponente A.

Die Polyol-Komponente A kann zusätzlich ein Harz enthalten. Dabei handelt es sich um flüssige bis feste organische Produkte, für die eine mehr oder weniger breite Verteilung der relativen Molmasse charakteristisch ist. Sie weisen meistens eine amorphe Struktur auf. Es ist vorteilhaft, wenn die Harze bei 20 °C in der Polyol-Komponente homogene, d.h. schlierenfreie Lösungen bilden. Es können die bekannten Harze verwendet werden, seien sie natürlichen oder synthetischen Ursprungs. Die natürlichen Harze können sowohl pflanzlicher als auch tierischer Herkunft sein. Beispiele dafür sind Schellack und Kolophoniumharze, wie Tallharz, Balsamharz oder Wurzelharz. Nicht nur die natürlichen Harze, sondern auch deren Derivate sind geeignet, wie dimerisierte, hydrierte, veresterte oder neutralisierte Harze. Die synthetischen Harze werden im allgemeinen durch Polymerisation oder Polykondensation gewonnen. Beispiele dafür sind Kohlenwasserstoff-, Terpen-, Cumaron/Inden-, Furan-, Alkyd-, Aldehyd-, Keton-, Keton-/Aldehyd-, Phenol-, Glycerinester-, Polyester-, Epoxid-, Harnstoff-, Melamin-, Polyamid- und Isocyanat-Harze.

Insbesondere müssen die erfindungsgemäß geeigneten 2K-PU-Klebstoffe Harze enthalten, die unpolare Anteile sowie zusätzlich polare Gruppen aufweisen, insbesondere reaktive Gruppen. Besonders geeignete Harze sind Aldehyd- oder Keton- und Keton-/Aldehyd-Harze. Diese müssen zumindest anteilig in dem erfindungsgemäßen Klebstoff enthalten sein. Durch die Auswahl der Harze ist eine verbesserte Adhäsion auf den polaren oder unpolaren Oberflächen der Substrate gegeben. Durch die reaktiven Gruppen, insbesondere OH-Gruppen, ist im Verlauf der Vernetzung dann eine feste Einbindung in die Polymermatrix möglich. Dabei wird die Kohäsion verbessert. Die Menge der Harze kann 2,5 Gew.-% bis 60 Gew.-% bezogen auf Komponente A betragen, insbesondere zwischen 5 bis 40 Gew.-%.

Als Komponente B) sind Polyisocyanate einzusetzen. Diese werden getrennt von der Polyol-Komponente gelagert und erst unmittelbar vor der Verklebung mit der Polyol-Komponente A) gemischt.

Die Polyisocyanate sind mehrfunktionell. Vorzugsweise enthalten die geeigneten mehrfunktionellen Isocyanate im Mittel 2 bis höchstens 5, vorzugsweise bis 4 und insbesondere 2 oder 3 NCO-Gruppen. Es handelt sich dabei beispielsweise um aliphatische Isocyanate, wie Hexan-1,6-diisocyanat (HDI), 1,6-Diisocyanato-2,2,4-trimethylhexan, Dimerfettsäure-diisocyanat; cycloaliphatische Isocyanate, wie hydriertes MDI (H₁₂MDI), Xylylendiisocyanat (XDI), m- und p-Tetramethylxylylendiisocyanat (TMXDI), 1-Isocyanatomethyl-3-isocyanato-1,5,5-trimethyl-cyclohexan (IPDI); aromatische isocynate, wie Toluylendiisocyanats (TDI) und seine Isomere, 2,4'- oder 4,4'-Diphenylmethandiisocyanat (MDI), 1,3- oder 1,4-Phenylendiisocyanat, 1,5-Naphthylendiisocyanat.

Als Di- oder Polyisocyanate werden vorzugsweise die aromatischen Isocyanate verwendet, z.B. Diphenylmethandiisocyanat, entweder in Form der reinen Isomeren, als Isomerengemisch der 2,4'-/4,4'-Isomeren oder auch das mit Carbodiimid verflüssigte Diphenylmethandiisocyanat (MDI), das sogenannte "Roh-MDI". Weiterhin können niedermolekulare oligomere Umsetzungsprodukte des MDI bzw. des Toluylendiisocyanates (TDI) mit niedermolekularen Diolen, wie z.B. Ethylenglykol, Diethyenglykol, Propylenglykol, Dipropylenglykol oder Triethylenglykol, verwendet werden. Bevorzugt sind aromatische Isocyanate mit einer Funktionalität von 2 bis 4.

Das Verhältnis der in der Isocyanatkomponente enthaltenen NCO-Gruppen zu den in der Polyolkomponenten enthaltenen OH-Gruppen liegt im Bereich 1,0:1 bis 2,0:1, wobei im Hinblick auf eine Feuchtigkeit des Substrats ein geringer Überschuss an NCO-Gruppen zweckmäßig ist. Insbesondere liegt das Verhältnis zwischen 1,03:1 bis 1,8:1.

Die erfindungsgemäß einsetzbaren 2K-Polyurethan-Klebstoffe können weiterhin Hilfsstoffe enthalten, die vorzugsweise ganz oder teilweise der Polyolkomponente zugemischt werden. Darunter werden Stoffe verstanden, die in der Regel zugesetzt werden, um die Eigenschaften der wesentlichen Komponenten in gewünschter Richtung zu verändern, z.B. Verarbeitbarkeit, Lagerfähigkeit, Gebrauchseigenschaften dem Anwendungszweck anzupassen. Beispiele dafür sind fein verteilte Füllstoffe, Verlaufmittel, Entlüfter, Thixotropiermittel, Katalysatoren, Alterungsschutzmittel, UV-Stabilisatoren, Farbstoffe, Lösemittel und Netzmittel.

Als Füllstoffe und/oder Pigmente geeignet sind gegenüber Isocyanaten nicht reaktive anorganische Verbindungen, wie Kreide, beschichtete Kreide, Kalkmehl, Calcium-Magnesium-Carbonate, Aluminiumoxide und -hydroxide, gefällte Kieselsäure, Titandioxid, Bariumsulfat, Zeolithe, Bentonite, Glas, Hohlkugeln, gemahlene Mineralien, soweit diese als Pulver vorliegen, d.h. eine Korngröße zwischen 1 bis 200 µm aufweisen, insbesondere zwischen 3 bis 50 µm. Solche Füllstoffe liegen nach dem Mischen in dem 2K-Polyurethan-Klebstoff dispergiert vor.

Weiterhin können Verlaufmittel, Haftvermittler, Weichmacher und/oder Stabilisatoren oder Lichtschutzmittel enthalten sein. Lösemittel können zugesetzt werden, bevorzugt sind die Klebstoffe jedoch lösemittelfrei.

Die erfindungsgemäß einsetzbaren 2K-Polyurethan-Klebstoffe können bei Raumtemperatur direkt miteinander reagieren. Zur Beschleunigung der Reaktion, auch bei niedrigen Temperaturen, können jedoch auch Katalysatoren enthalten sein. Es handelt sich dabei um die bekannten metallorganischen Verbindungen wie Zinn(II)salze von Carbonsäuren, wie Zinn-II-acetat, -ethylhexoat und -diethylhexoat, starke Basen wie Alkali-Hydroxide, -Alkoholate und -Phenolate, Di-n-octyl-Zinn-mercaptid, Dibutylzinn-maleat, -diacetat, -dilaurat, -dichlorid, -bisdodecyl-mercaptid oder Blei-phenyl-ethyl-dithiocarbaminat.

Zusätzlich geeignet sind auch aliphatische oder cycloaliphatische tertiäre Amine, insbesondere solche, die zusätzlich noch gegenüber den Isocyanaten reaktive Gruppen tragen. Beispiele für solche Amine sind Dialkylethanolamin mit C1 bis C3-Alkylresten, Trialkanolamin mit C1 bis C6- Alkonolgruppen, Tricyclohexanolamin, Diethanolalkylamin mit C1 bis C6- Alkylresten, Diethanolphenylamin, Diazabicyclo-octan (Dabco), Triethylamin, Dimethylbenzylamin, Bis-dimethylaminoethylether, Tetramethylguanidin, Bis-dimethylaminomethyl-phenol, 2,2'-Dimorpholinodiethylether, Bis(2-dimethylaminoethyl)ether, N,N-Dimethylpiperazin, N,N,N,N-Tetramethylalkan-1,3-diamin mit C3 bis C6 Alkanrest.

Die Katalysatoren können in Mengen zwischen 0,01 bis 3 Gew.-%, insbesondere zwischen 0,1 bis 2 Gew.-% enthalten sein. Insgesamt können die Hilfsstoffe zwischen 0 bis 70 Gew.-% bezogen auf Komponente A enthalten sein, bevorzugt zwischen 0,5 bis 50 Gew.-%.

Zur Herstellung des erfindungsgemäß einsetzbaren 2K-Polyurethan-Klebstoffs wird zunächst die Polyolkomponente hergestellt. Dazu wird zunächst eine Lösung des Harzes in einer bzw. in allen Polyolen hergestellt, indem man gegebenenfalls die Mischung unter Rühren bis auf 100 °C aufwärmt. Anschließend werden die Hilfsstoffe zugemischt. Die Hilfsstoffe können auch ganz oder teilweise der Isocyanat-Komponente zugemischt werden, solange diese nicht mit den Icocyanaten reagieren. Diese zwei Komponenten werden üblicherweise bis zu ihrer Anwendung getrennt gelagert. Zur Anwendung werden diese beiden Komponenten in an sich bekannter Weise miteinander gemischt und das Gemisch auf die zu verklebenden Substrate aufgetragen.

Gemäß dem erfindungsgemäßen Verfahren werden die Substrate an der Oberfläche vor dem Verkleben von Verunreinigungen gereinigt, ggf kann die Oberfläche geschliffen oder aufgerauht werden. Das kann beispielsweise durch Abblasen, Abstreifen oder Abwischen geschehen. Eine Vorbehandlung, beispielsweise durch eine Coronabehandlung, durch Anlösen der Oberfläche mit halogenhaltigen Lösemitteln oder durch Auftragen eines Primers auf das Substrat ist nicht notwendig. Unter Primer sollen hier solche wässrigen, lösemittelhaltigen, flüssige oder aus der Gasphase aufgetragene Überzugsmittel verstanden werden, die sich zwischen Substratoberfläche und nachfolgender Klebstoffschicht befinden und zur Haftungsverbesserung oder als Korrosionsschutzschicht aufgetragen werden.

Auf das gereinigte Substrat wird der erfindungsgemäße geeignete Klebstoff aufgetragen. Die Schichtdicke soll zwischen 0,1 bis 1 mm betragen, insbesondere zwischen 0,2 bis 0,4 mm. Der Klebstoff kann auf eine Substratoberfläche aufgetragen werden, es ist jedoch auch möglich, dass beide Substratoberflächen mit dem Klebstoff beschichtet werden.

In der Arbeitsweise nach dem erfindungsgemäßen Verfahren werden die geeigneten 2K-PU-Klebstoffe im vorgegebenen Mischungsverhältnis gemischt. Danach werden sie auf die geeigneten Substrate, insbesondere Metallsubstrate oder Kunststoffsubstrate, aufgetragen. Dabei soll die Temperatur von Substraten und Klebstoff zwischen 15 bis 70°C liegen, insbesondere zwischen 20 bis 35°C.

Der fertig vermischte Klebstoff soll bei der Applikationstemperatur dünnflüssig bis pastös und auch thixotrop sein. Der Klebstoff kann mit an sich bekannten Verfahrensweisen aufgetragen werden, beispielsweise durch Pinseln, Sprühen, Rollen oder Walzen.

Danach werden die beiden Substrate zusammengefügt. Gegebenenfalls kann es zweckmäßig sein, die Substrate kurz miteinander zu verpressen um sicherzustellen, dass keine Lufteinschlüsse zwischen den beiden Substraten vorhanden sind und einen vollflächigen Kontakt zu ermöglichen. Solange der Klebstoff noch nicht ausgehärtet ist, ist es zweckmäßig, die Substrate gegeneinander zu fixieren.

Danach können die verklebten Substrate aushärten. Eine Aushärtung soll im Allgemeinen bei Temperaturen zwischen 15 bis 60°C durchgeführt werden, insbesondere bis 30°C. Bei einer erhöhten Temperatur ist eine deutlich schnellere Aushärtung zu beobachten. Es ist jedoch ausreichend, wenn bei niedrigen Temperaturen gearbeitet wird. Dann ist bevorzugt mindestens ein Katalysator in dem 2K-PU-Klebstoff vorhanden.

Die Vernetzung ist in Abhängigkeit von der Katalysatorkonzentration nach 30 Minuten bis 24 Stunden beendet. Danach kann die Klebestelle belastet werden. In einer besonders vorteilhaften Arbeitsweise ist es zweckmäßig, den Klebstoff bei Umgebungstemperatur auszuhärten. Wird nach dem Vernetzen die Verklebung getempert, d. h. einer thermischen Alterung bei Temperaturen zwischen 30 bis 80°C unterzogen, wird die Festigkeit der Verklebung erhöht. Dabei ist darauf zu achten, dass bei der erhöhten Temperatur das Substrat, beispielsweise ein Kunststoffsubstrat, nicht zerstört wird. Dabei soll die Dauer von 5 bis 200 Stunden betragen.

Ein weiterer Vorteil des erfindungsgemäß geeigneten Verfahrens liegt darin, dass dieser Klebstoff auch unter feuchten Umweltbedingungen blasenfrei ohne zu schäumen aushärtet. Eine Belastung des Substrates bei der Verklebung durch Regen oder hohe Luftfeuchtigkeit führt nicht zum einen Aufschäumen der Verklebung. Damit ist auch eine gute Haftung unter schwierigen Anwendungsbedingungen sichergestellt.

Durch eine Verwendung von erfindungsgemäß geeigneten PU-Klebstoffen zum Verkleben von Metall- oder Kunststoffsubstraten ohne weitere Vorbehandlung können Verklebungen hergestellt werden, die nach Belastung durch Luftfeuchtigkeit eine Zugscherfestigkeit oberhalb von 10 MPa auf Metallsubstraten aufweisen. Bei Kunststoffsubstraten liegt die Festigkeit oberhalb von 4 MPa.

Der erfindungsgemäß einsetzbare Klebstoff ist insbesondere geeignet, Bauteile zu verkleben, die in ihrem Gebrauch durch Feuchtigkeit belastet werden. Insbesondere können steife Substrate miteinander verklebt werden, auch flexible auf steife Substrate können gut verklebt werden. Bei einer erfindungsgemäß durchgeführten Verklebung ist zu beobachten, dass auch nach häufiger Belastung bei hoher Luftfeuchtigkeit oder bei Belastung durch flüssiges Wasser keine wesentliche Schwächung der Verklebung erfolgt. Beispielsweise kann man feststellen, dass nach wiederholtem Klimawechseltest, d.h. eine Belastung durch erhöhte Luftfeuchtigkeit und erhöhte Temperatur, ein Abfall der Festigkeit der Verklebung nicht beobachtet wird.

Die Erfindung wird nun durch Beispiele exemplarisch erläutert.

| Beispiel | 1 | 2 | 3 | 4 |
|---|---|---|---|---|
| | (Vergleich) | (Vergleich) | | |
| Rizinusöl | 42,5 | 32,3 | 32,5 | 32,5 |
| Trifunktionelles | 8,0 | 8,0 | 8,0 | 8,0 |
| Polyetherpolyol (Mₙ 450) | | | | |
| Molekularsieb | 4,3 | 4,3 | 4,3 | 4,3 |
| Füllstoff (CaCO3) | 42,9 | 42,9 | 42,9 | 42,9 |
| Aerosil | 2,3 | 2,3 | 2,3 | 2,3 |
| Balsamharz (Abietiol E) | 0 | 10 | 0 | 0 |
| Acetophenon-Form- | 0 | 0 | 10 | 0 |
| aldehyd-Harz, hydriert | | | | |
| Cyclohexanon-Form- | 0 | 0 | 0 | 10 |
| aldehyd-Harz | | | | |
| Roh-MDI | 26 | 18,3 | 30 | 27 |

Aus den Polyolen, dem Harz und dem Pigment wird eine Mischung durch intensives Rühren hergestellt. Dazu wird unmittelbar vor der Verklebung das Isocyanat als Härter zugemischt. Der 2K-Klebstoff wird sofort zum Verkleben eingesetzt. Normprüfkörper werden vor dem Verkleben mit Isopropanol geeignet. Danach wird der Klebstoff in dünner Schicht aufgetragen und ein zweites Substrat überlappend verklebt und mit Klammern fixiert. Die Härtung geschieht für 7 Tage bei Raumtemperatur (ca. 25°C).

Die Proben werden dann vermessen und parallel dazu einen Klimawechseltest unterworfen und danach vermessen.

| | Zugscherfestigkeiten in MPa | | | | | | | |
|---|---|---|---|---|---|---|---|---|
| Zyklen Klimawechseltest | 0 | 20 | 0 | 20 | 0 | 20 | 0 | 20 |
| | V1 | | V2 | | V3 | | V4 | |
| Aluminium/Al | 13,3 | 6,8 | 11,1 | 7,3 | 15,9 | 16,0 | 16,9 | 17,0 |
| Stahl/St | 13,0 | 5,9 | 14,6 | 6,6 | 13,8 | 13,6 | 15,8 | 15,7 |
| V2A/V2A | 9,0 | 4,1 | 7,8 | 4,0 | 12,0 | 12,2 | 12,8 | 12,6 |
| | | | | | | | | |
| ABS/ABS | 3,9 | 2,0 | 3,8 | 3,0 | 4,6 | 5,0 | 5,1 | 5,6 |
| PC | 6,6 | 4,8 | 3,3 | 3,0 | 7,7 | 7,7 | 7,9 | 8,0 |
| PMMA | 3,7 | 1,5 | 3,6 | 1,5 | 4,1 | 4,5 | 5,5 | 5,8 |
| Epoxid | 13,0 | 10,1 | 11,8 | 9,1 | 15,4 | 15,7 | 16,7 | 16,8 |

Zugscherfestigkeit: DIN 53283, EN 1465
Klimawechseltest: 20 Zyklen zu je 12 h zwischen -40°C (0 % r.H.) und 80°C (100 % r.H.)

Die erfindungsgemäßen Versuche zeigen, dass ein Verlust der Festigkeit unter den Bedingungen des Klimawechseltests nicht stattfindet.

Eine weitere Probe wird in einen Aluminiumbecher gegeben. Dieser wird mit Wasser überschichtet und vernetzt bei Raumtemperatur.

Die Oberfläche sowie eine Schnittstelle zeigen keine Schaumbildung.

Ein Klebstoff nach Versuch 3 wird mit zwei Aluminiumsubstraten verklebt und in Wasser ausgehärtet.

Ein Klebstoff nach Versuch 4 wird mit zwei ABS -Substraten verklebt und direkt in einer Klimawechselkammer ausgehärtet.

Beide Proben zeigen eine hervorragende Verklebung.

## Patentansprüche

1. Verfahren zum Verkleben von Metall- oder Kunststoffsubstraten, wobei
- das Substrat von anhaftenden Verunreinigungen befreit wird,
- direkt auf mindestens ein Substrat ein 2-Komponenten-Polyurethan-Klebstoff aufgebracht wird, ohne einen Primer aufzutragen,
- und die Substrate zusammengefügt und der Verbund ausgehärtet wird,
wobei der 2- Komponenten-Polyurethan-Klebstoff besteht aus einer Polyolkomponente A, enthaltend
- 1 bis 95 Gew.-% mindestens eines oleochemischen Polyols
- 1 bis 10 Gew.-% mindestens eines anderen drei-, vier- oder fünffunktionellen Polyols mit einer Molmasse von 90 bis 750 g/mol,
- 2,5 bis 60 Gew.-% mindestens eines Aldehyd-, Keton- und/oder Keton-/Aldehyd-Harzes mit einem Molekulargewicht von
250 bis 25000 g/ mol,
jeweils bezogen auf die Komponente A,
die frei von niedermolekularen Diolen mit einem Molekulargewicht unter 300 g/mol ist, sowie
- 0 bis 70 Gew.-% von weiteren Hilfsstoffen,
und einer Komponente B, enthaltend
- mindestens ein Polyisocyanat,
wobei das NCO/OH-Verhältnis der Isocyanatkomponente zu der Polyolkomponente zwischen 1,0 bis 2,0:1 beträgt.

2. Verfahren nach Anspruch 1, **dadurch gekennzeichnet, dass** das Substrat aus Metallen oder Legierungen besteht.

3. Verfahren nach Anspruch 1, **dadurch gekennzeichnet, dass** das Substrat aus Kunststoffen ausgewählt wird aus PVC, Polycarbonat, Polystyrol, ABS, PMMA, Epoxidharzen, Polyamiden, Polyurethanen, Polyestern und Blends dieser Kunststoffe.

4. Verfahren nach einem der Ansprüche 1 bis 3, **dadurch gekennzeichnet, dass** die Aushärtung bei einer Temperatur zwischen 15 und 60°C durchgeführt wird, insbesondere bis 30°C.

5. Verfahren nach einem der Ansprüche 1 bis 4, **dadurch gekennzeichnet, dass** die verklebten Substrate bei einer Temperatur zwischen 30 und 80°C für 5 bis 200 Stunden getempert werden.

6. Verfahren nach einem der Ansprüche 1 bis 5, **dadurch gekennzeichnet, dass** die Aushärtung unter wässrigen oder feuchten Umgebungsbedingungen durchgeführt wird.

7. Verfahren nach einem der Ansprüche 1 bis 6, **dadurch gekennzeichnet, dass** der 2K-PU-Klebstoff in einer Menge von 20 bis 500 g / m² aufgetragen wird.

8. Verfahren nach einem der Ansprüche 1 bis 7, **dadurch gekennzeichnet, dass** der 2K-PU-Klebstoff 2,5 bis 60 Gew.-% eines Keton-Formaldehyd-Harzes enthält.

9. Verfahren nach einem der Ansprüche 1 bis 8, **dadurch gekennzeichnet, dass** der 2K-PU-Klebstoff 2,5 bis 60 Gew.-% eines Cyclohexanon-Formaldehyd-Harzes enthält.

10. Verfahren nach einem der Ansprüche 1 bis 9, **dadurch gekennzeichnet, dass** der 2K-PU-Klebstoff als Hilfsstoff 0,5 bis 50 Gew.-% mindestens eines Pigments oder Füllstoffs in Pulverform enthält.

11. Verfahren nach einem der Ansprüche 1 bis 9, **dadurch gekennzeichnet, dass** als Komponente B aromatische Polyisocyanate und ihre Gemische mit einer Funktionalität zwischen 2,0 und 2,8 eingesetzt werden.

12. Verwendung eines fließförmigen 2-Komponenten Polyurethan-Klebstoff bestehend aus einer Polyolkomponente A, enthaltend
- 1 bis 95 Gew.-% bezogen auf die Polyolkomponente mindestens eines oleochemischen Polyols,
- 1 bis 10 Gew.-% mindestens eines drei, vier oder fünfwertigen Polyols mit einer Molekulargewicht von 90 bis 750 g/mol,
- 2,5 bis 60 Gew.-% eines Aldehyd-, Keton- oder Keton-/Aldehyd-Harzes mit einem Molekulargewicht von 250 bis 25000 g/mol,
sowie
- 0 bis 70 Gew.-% von weiteren Hilfsstoffen,
die frei von niedermolekularen Diolen mit einem Molekulargewicht unter 300 g/mol ist,
und einer Komponente B aus mindestens einem Polyisocyanat,
wobei das NCO/OH-Verhältnis der Komponente B zu der Komponente A im Bereich von 1,0:1 bis 2,0:1 beträgt
zum Primer-freien Verkleben von Metall- und/oder Kunststoffsubstraten.

13. Verwendung nach Anspruch 12 zum Verkleben unter wässrigen oder feuchten Umgebungsbedingungen.

14. Verwendung nach Anspruch 12 oder 13 zum Verkleben von Kunststoffsubstraten ausgewählt aus Polycarbonat, Polyvinylchlorid, Polystyrol, ABS, PMMA, Polyamid, Polyestern oder Polyurethanen, insbesondere von nicht folienförmigen Substraten.

15. Verwendung nach Anspruch 12 oder 13 zum Verkleben von Substraten aus Metallen und Metalllegierungen.

## Claims

1. A method for adhesive bonding of metal or plastic substrates, wherein
- the substrate is cleared of adhering impurities,
- a a two-component polyurethane is directly brought onto at least one substrate, without applying a primer,
- and the substrates are bonded together and the bond is cured,
wherein the two-component polyurethane adhesive consists of a polyol component A, containing
- 1 to 95% by weight of at least one oleochemical polyol,
- 1 to 10% by weight of at least one other three-, four- or five-functional polyol with a molar mass from 90 to 750 g/mol,
- 2.5 to 60% by weight of at least one aldehyde, ketone and/or ketone/aldehyde resin with a molecular weight from 250 to 25,000 g/mol,
each based on the component A,
which is free of low molecular diols having a molecular weight below 300 g/mol, as well as
- 0 to 70% by weight of further adjuvants,
and a component B, containing
- at least one polyisocyanate,
wherein the NCO/OH ratio of the isocyanate component to the polyol component is comprised between 1.0 and 2.0:1.

2. The method according to claim 1, **characterized in that** the substrate consists of metals or alloys.

3. The method according to claim 1, **characterized in that** the substrate consisting of plastic materials is selected from PVC, polycarbonate, polystyrene, ABS, PMMA, epoxy resins, polyamides, polyurethanes, polyesters and blends of these plastic materials.

4. The method according to one of claims 1 to 3, **characterized in that** the curing is carried out at a temperature comprised between 15 and 60°C, in particular, up to 30°C.

5. The method according to one of claims 1 to 4, **characterized in that** the adhesively bonded substrates are tempered at a temperature comprised between 30 and 80°C for 5 to 200 hours.

6. The method according to one of claims 1 to 5, **characterized in that** the curing is carried out under aqueous or humid environmental conditions.

7. The method according to one of claims 1 to 6, **characterized in that** the two-component PU adhesive is applied in an amount from 20 to 500 g/m².

8. The method according to one of claims 1 to 7, **characterized in that** the two-component PU adhesive contains 2.5 to 60% by weight of a ketone-formaldehyde resin.

9. The method according to one of claims 1 to 8, **characterized in that** the two-component PU adhesive contains 2.5 to 60% by weight of a cyclohexanone-formaldehyde resin.

10. The method according to one of claims 1 to 9, **characterized in that** the two-component PU adhesive contains 0.5 to 50% by weight of at least one pigment or filler in powder form as an adjuvant.

11. The method according to one of claims 1 to 9, **characterized in that** aromatic polyisocyanates and their mixtures with a functionality comprised between 2.0 and 2.8 are applied as a component B.

12. The use of a flow-shaped two-component polyurethane adhesive consisting of a polyol component A, containing
- 1 to 95% by weight, based on the polyol component, of at least one oleochemical polyol,
- 1 to 10% by weight of at least one other three-, four- or five-functional polyol with a molecular mass from 90 to 750 g/mol,
- 2.5 to 60% by weight of at least one aldehyde, ketone and/or ketone/aldehyde resin with a molecular weight from 250 to 25,000 g/mol,
as well as
- 0 to 70% by weight of further adjuvants,
which is free of low molecular diols having, a molecular weight below 300 g/mol,
and a component B consisting of at least one polyisocyanate,
wherein the NCO/OH ratio of the component B to the component A is in the range from 1.0:1 to 2.0:1
for primerless bonding of metal and/or plastic substrates.

13. The use according to claim 12 for adhesive bonding under aqueous or humid environmental conditions.

14. The use according to claim 12 or 13 for adhesive bonding of plastic substrates selected from polycarbonate, polyvinyl chloride, polystyrene, ABS, PMMA, polyamide, polyesters or polyurethanes, in particular of not sheet-shaped substrates.

15. The use according to claim 12 or 13 for adhesive bonding of substrates consisting of metals and of metal alloys.

## Revendications

1. Procédé pour le collage de substrats en métal ou en matière synthétique, dans lequel :
le substrat est libéré de ses impuretés qui y adhèrent ;
- un adhésif de polyuréthane à deux composants est appliqué directement sur au moins un substrat, sans devoir appliquer une couche primaire ;
- et les substrats sont assemblés et le composite est durci,
l'adhésif de polyuréthane à deux composants étant constitué par un composant de polyol A contenant :
de 1 à 95 % en poids d'au moins un polyol oléochimique ;
de 1 à 10 % en poids d'au moins un autre polyol trifonctionnel, tétrafonctionnel ou pentafonctionnel possédant une masse molaire de 90 à 750 g/mol ;
- de 2,5 à 60 % en poids d'au moins une résine d'aldéhyde, de cétone et/ou de cétone/aldéhyde possédant un poids moléculaire de 250 à 25.000 g/mol ; chaque fois rapportés au composant A ;
qui est exempt de diols à bas poids moléculaire dont le poids moléculaire est inférieur à 300 g/mol ; et
- de 0 à 70 % en poids d'adjuvants supplémentaires ;
et par un composant B contenant :
- au moins un polyisocyanate ;
le rapport des groupes NCO/OH du composant diisocyanate à ceux du composant de polyol s'élevant de 1,0 à 2,0:1.

2. Procédé selon la revendication 1, **caractérisé en ce que** le substrat est constitué par des métaux ou par des alliages.

3. Procédé selon la revendication 1, **caractérisé en ce que** le substrat est choisi parmi des matières synthétiques constituées de PVC, de polycarbonate, de polystyrène, d'ABS, de PMMA, de résines époxydes, de polyamides, de polyuréthanes, de polyesters et par des mélanges de ces matières synthétiques.

4. Procédé selon l'une quelconque des revendications 1 à 3, **caractérisé en ce que** le durcissement est mis en oeuvre à une température entre 15 et 60 °C, en particulier jusqu'à 30 °C.

5. Procédé selon l'une quelconque des revendications 1 à 4, **caractérisé en ce que** les substrats collés sont soumis à un traitement thermique à une température entre 30 et 80 °C pendant un laps de temps de 5 à 200 heures.

6. Procédé selon l'une quelconque des revendications 1 à 5, **caractérisé en ce que** le durcissement est mis en oeuvre dans des conditions ambiantes aqueuses ou humides.

7. Procédé selon l'une quelconque des revendications 1 à 6, **caractérisé en ce que** l'adhésif en polyuréthane à deux composants est appliqué en une quantité de 20 à 500 g/m².

8. Procédé selon l'une quelconque des revendications 1 à 7, **caractérisé en ce que** l'adhésif en polyuréthane à deux composants contient une résine de cétone-formaldéhyde à raison de 2,5 à 60 % en poids.

9. Procédé selon l'une quelconque des revendications 1 à 8, **caractérisé en ce que** l'adhésif en polyuréthane à deux composants contient une résine de cyclohexanone-formaldéhyde à raison de 2,5 à 60 % en poids.

10. Procédé selon l'une quelconque des revendications 1 à 9, **caractérisé en ce que** l'adhésif en polyuréthane à deux composants contient, à titre de substance auxiliaire, de 0,5 à 50 % en poids d'au moins un pigment ou une matière de charge sous forme pulvérulente.

11. Procédé selon l'une quelconque des revendications 1 à 9, **caractérisé en ce qu'**on met en oeuvre, à titre de composant B, des polyisocyanates aromatiques et leurs mélanges, possédant une fonctionnalité entre 2,0 et 2,8.

12. Utilisation d'un adhésif fluide de polyuréthane à deux composants constitué par :
un composant de polyol A contenant :
de 1 à 95 % en poids, rapportés au composant de polyol, d'au moins un polyol oléochimique ;
- de 1 à 10 % en poids d'au moins un autre polyol trifonctionnel, tétrafonctionnel ou pentafonctionnel possédant un poids moléculaire de 90 à 750 g/mol ;
- de 2,5 à 60 % en poids d'une résine d'aldéhyde, de cétone ou de cétone/aldéhyde possédant un poids moléculaire de 250 à 25.000 g/mol ; et
de 0 à 70 % en poids d'adjuvants supplémentaires ;
qui est exempt de diols à bas poids moléculaire dont le poids moléculaire inférieur à 300 g/mol ;
et par un composant B constitué par au moins un polyisocyanate ; le rapport des groupes NCO/OH du composant B à ceux du composant A se situant dans la plage de 1,0 à 2,0:1,
pour le collage exempt de couche primaire, de substrats en métal et/ou en matière synthétique.

13. Utilisation selon la revendication 12, pour le collage dans des conditions ambiantes aqueuses ou humides.

14. Utilisation selon la revendication 12 ou 13, pour le collage de substrats en matière synthétique, choisis parmi le polycarbonate, le chlorure de polyvinyle, le polystyrène, l'ABS, le PMMA, le polyamide, des polyesters ou des polyuréthanes, en particulier de substrats non pelliculaires.

15. Utilisation selon la revendication 12 ou 13, pour le collage de substrats constitués par des métaux et des alliages de métaux.
